# EUROPÄISCHE PATENTSCHRIFT

(11) **EP 1 379 402 B1**
(45) Veröffentlichungstag und Bekanntmachung des Hinweises auf die Patenterteilung: **29.09.2004**
(21) Anmeldenummer: 02764058.0
(22) Anmeldetag: 10.04.2002
(51) Int. Cl.: B60J 7/047

(54) **LAMELLENDACH**
SEGMENTED ROOF
TOIT A LAMELLES

(30) Priorität: 20.04.2001 DE 10119701
(43) Veröffentlichungstag der Anmeldung: 14.01.2004
(73) Patentinhaber: CTS Fahrzeug-Dachsysteme GmbH, 21079 Hamburg (DE)
(72) Erfinder: SALZ, Wolfram, 71665 Vaihingen (DE)
(74) Vertreter: Wittner, Walter
(86) Internationale Anmeldenummer: PCT/EP2002/004013
(87) Internationale Veröffentlichungsnummer: WO 2002/085653

(56) Entgegenhaltungen:
- WO-A-99/11479
- DE-C- 19 608 916
- DE-C- 19 856 873
- DE-C- 19 927 654

## Beschreibung

Die Erfindung betrifft ein Lamellendach gemäß dem Oberbegriff des Anspruches 1.

Lamellendächer der vorgenannten Art sind aus der DE 199 27 654 C1 bekannt. Die Ausstellbewegung in Fahrzeuglängsrichtung aufeinander folgender Lamellen erfolgt durch Zwangskopplung des Lamellenträgers der einen Lamelle gegen die Steuerwippe der anderen Lamelle, wobei die Steuerwippe über einen Stützzapfen in einer Führungskulisse der anderen, bezogen auf die Fahrtrichtung vorderen Lamelle läuft, die aufgrund der Zwangskopplung beim Ausschwenken der rückwärtigen Lamelle über die Steuerwippe aufgestellt wird. Die Zwangskopplung ist dadurch realisiert, dass der Lamellenträger der rückwärtigen Lamelle und die mit der vorderen Lamelle zusammenwirkende Steuerwippe in Fahrzeuglängsrichtung einander überlappend auf einem Führungsschlitten abgestützt sind und im Überlappungsbereich über eine kulissengeführte Schwenkachse verbunden sind.

Die Vorteile einer solchen Konstruktion liegen in ihrem grundsätzlich einfachen Aufbau, ihrer Funktionssicherheit und auch ihrem geringem Raumbedarf. Es sind hierfür aber verhältnismäßig hohe Kräfte bei engen Tolerierungen zu beherrschen, so dass fertigungstechnisch bei einer solchen Lösung relativ hohe Anforderungen zu erfüllen sind.

Ausgehend hiervon liegt der Erfindung die Aufgabe zugrunde, eine Lösung zu schaffen, die bei guter fertigungstechnischer Beherrschbarkeit zusätzlich weitere funktionale Möglichkeiten eröffnet.

Gemäß der Erfindung wird dies bei einem Lamellendach der eingangs genannten Art durch die kennzeichnenden Merkmale des Anspruches 1 erreicht, die günstige Hebellängen ermöglichen und dadurch sowohl Vorteile in der Beherrschung der aufzunehmenden bzw. aufzubringenden Kräfte wie auch hinsichtlich der einzuhaltenden Toleranzen erbringen. Zusätzlich kann die bei dieser Lösung gegebene Überlappung der Steuerwippe zu der bezogen auf die Fahrtrichtung vorderen Lamelle und ihrem Lamellenträger in einfacher Weise genutzt werden, um diese Lamelle in Öffnungsrichtung des Lamellendaches, aber auch in Gegenrichtung gegen den rückwärtigen Führungsschlitten abzustützen und eine diesbezügliche Verriegelung in Abhängigkeit vom Ausstellwinkel der rückwärtigen Lamelle zu steuern.

Diese Schubabstützung aufeinander folgender Führungsschlitten lässt sich bei dem erfindungsgemäßen Grundkonzept mit geringem Aufwand mit einer Verriegelung der in der Öffnungsstellung des Lamellendaches aufeinander gefahrenen Führungsschlitten gegeneinander kombinieren, wobei der hierfür vorgesehene Sperrhebel mit dem jeweiligen Führungsschlitten in bevorzugter Weise koaxial zur Steuerwippe verbunden sein kann, so dass diesbezüglich mit verringertem Fertigungsaufwand auch eine geringere Toleranzempfindlichkeit einhergeht.

Der Sperrhebel kann zudem bei dieser Lösung in vorteilhafter Weise in einer Doppelfunktion genutzt werden, nämlich einerseits, wie vorstehend beschrieben, zur Verriegelung der aufeinander gefahrenen Führungsschlitten gegeneinander, und andererseits, bezogen auf die Schließlage des Lamellendaches, als Rastabstützung gegenüber der jeweils bezogen auf die Fahrtrichtung vorne liegenden Lamelle bzw. deren Lamellenträger, wobei diese Rastabstützung bei entsprechender konstruktiver Auslegung ergänzend und überlappend zur schubsteifen Abstützung aufeinander folgender Lamellenträger über die jeweilige Steuerwippe eingesetzt werden kann, so dass die entsprechenden Kupplungsflächen verringerten Belastungen ausgesetzt sind bzw. auch so gestaltet werden können, dass in den jeweiligen Verriegelunaspositionen eine Verspannung der gegeneinander auflaufenden Kupplungsflächen eintritt, die für die Sicherung des jeweiligen Dachverbundes im Hinblick auf die Aussteifung wie auch im Hinblick auf die Vermeidung von Klappergeräuschen vorteilhaft sein kann.

Die Erfindung lässt sich bei verhältnismäßig geringer Größe der Führungsschlitten und bei einer kompakten Konfiguration der Führungsmechanik realisieren, wobei sich ein in Fahrzeugquerrichtung geschichteter Aufbau mit zur Fahrzeugaußenseite hin gelegenem Sperrhebel, zur Fahrzeugmitte auf diesen folgender Steuerwippe sowie auf diese folgendem Lamellenträger als zweckmäßig erweist, der auch im Überlappungsbereich dieser Teile so schmal baut, dass der Lamellenträger auf seiner der Fahrzeugmitte zugewandten Seite mit einer Auskragung versehen werden kann, die als Anschlag für die dem nächst folgenden Führungsschlitten zugeordnete Steuerwippe genutzt werden kann.

Aufgrund der in Verschieberichtung des Lamellendaches gleichgerichteten und einander überlappenden Erstreckung des Sperrhebels, der Steuerwippe und des Lamellenträgers, die einem Führungsschlitten zugeordnet und gegenüber diesem gelagert sein, sowie aufgrund dessen, dass in der Öffnungsstellung des Lamellendaches bei aufeinander gefahrenen Führungsschlitten nicht nur die ausgestellten Lamellen mit den ihnen zugeordneten Lamellenträgern einander in Verschieberichtung des Daches überlappen, sondern auch die Sperrhebel und die Steuerwippen von aufeinander folgenden Führungsschlitten, bietet die Erfindung auch die Möglichkeit, insbesondere die Steuerwippen zur jeweiligen Abstützung der Lamellen bzw. der zugehörigen Lamellenträger gegen den Führungsschlitten zu nutzen, der in Öffnungsrichtung des Lamellendaches auf den Führungsschlitten folgt, gegenüber dem die jeweilige Lamelle gelagert ist. Hierzu ist es insbesondere von Vorteil, den in der Führungskulisse eines Lamellenträgers laufenden Stützzapfen der Steuerwippe, die auf dem zum Lamellenträger rückwärtigen Führungsschlitten gelagert ist, als Kupplungselement für die Steuerwippe zu nutzen, die auf dem jeweils voraufgehenden Führungsschlitten gelagert ist und die beim Auffahren dieses Führungsschlittens gegen den Stützzapfen verriegelbar ist. Bei einer derartigen Abstützung bilden aufeinander folgenden Führungsschlitten zugeordnete Steuerwippen jeweils Stützdreiecke, die den Verband der ausgestellten Lamellen aussteifen, wobei die Aussteifung durch eine entsprechende Verspannung in der Kupplungsverbindung der über den Stützzapfen miteinander verkuppelten Steuerwippen erhöht werden kann.

Weitere Einzelheiten und Merkmale der Erfindung ergeben sich aus den Ansprüchen. Ferner wird die Erfindung nachfolgend anhand der Zeichnungen mit weiteren Einzelheiten beispielhaft erläutert. Es zeigen:

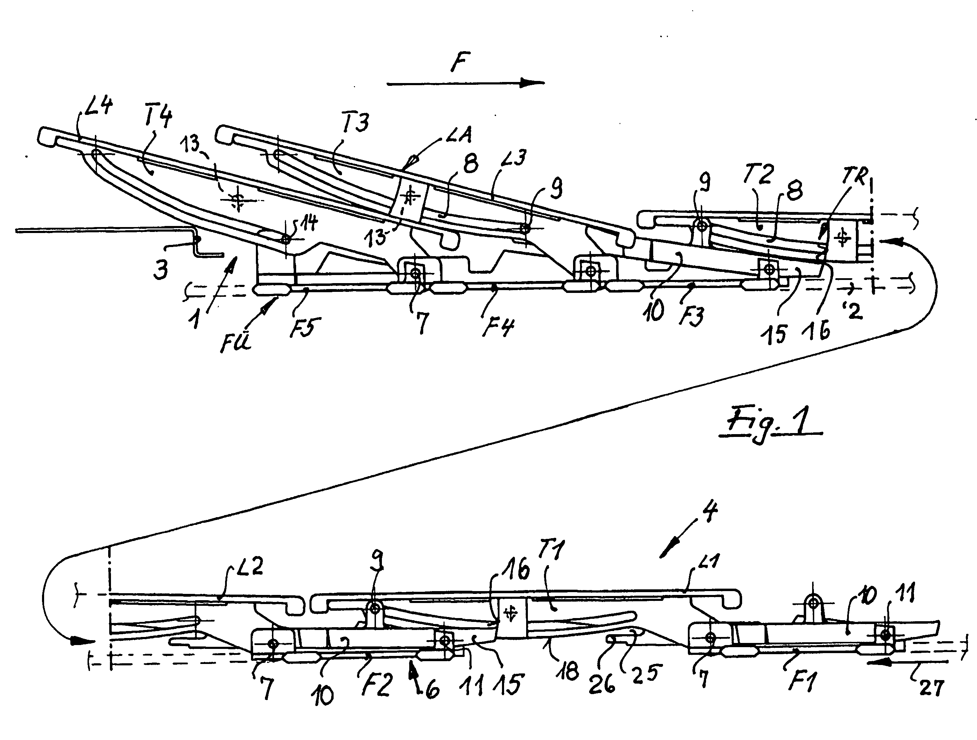

- Fig.1: bezogen auf ein Lamellendach für Fahrzeuge mit quer zur Dachöffnung liegenden Lamellen, die beiderseits der Dachöffnung in in Fahrzeuglängsrichtung verlaufenden Führungsschienen über Führungsschlitten geführt sind und die in der SchließStellung einen flächigen, die Dachöffnung abdeckenden Verbund bilden und in der Öffnungsstellung entgegen der Fahrtrichtung schichtartig einander übergreifend schräg nach hinten oben angestellt gegen die rückwärtige Begrenzung der Dachöffnung verfahren sind, in einer schematisierten Ansicht bei teilweise geöffnetem Lamellendach die bezogen auf die Fahrtrichtung rechtsseitige Abstützung der Lamellen über ihre Führungsschlitten in der Schienenführung, von der Fahrzeugmitte aus gesehen,
- Fig. 2: eine der Fig. 1 entsprechende Darstellung der gleichen, bezogen auf die Fahrtrichtung rechtsseitigen Lamellenabstützung in einer Ansicht von der Gegenseite, d.h. von seitlich außen, wobei der Übersichtlichkeit halber die zwischen Lamellenträger und Sperrhebel liegende Steuerwippe nicht dargestellt ist,

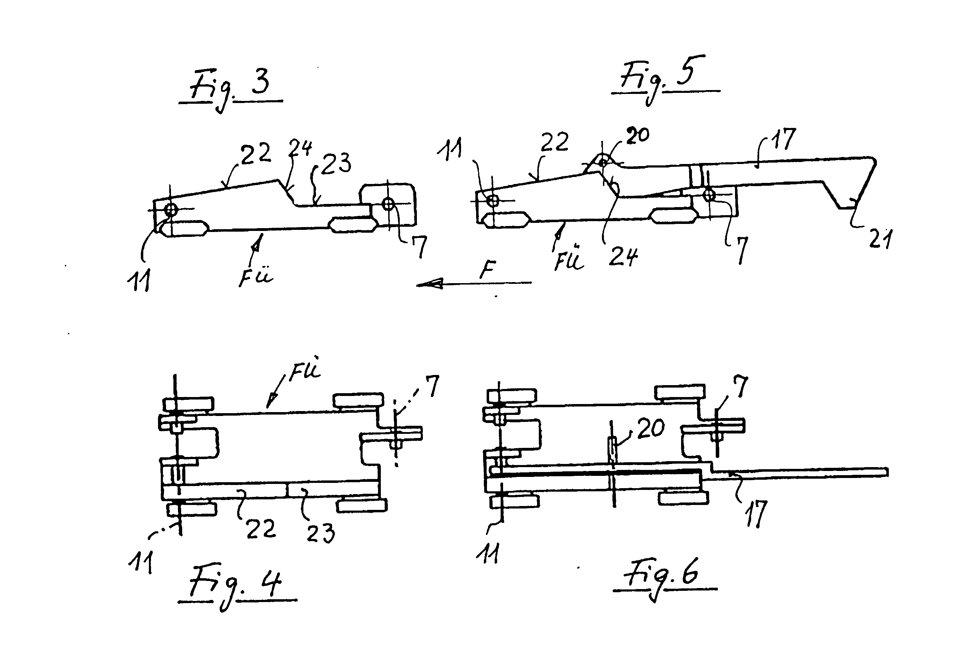

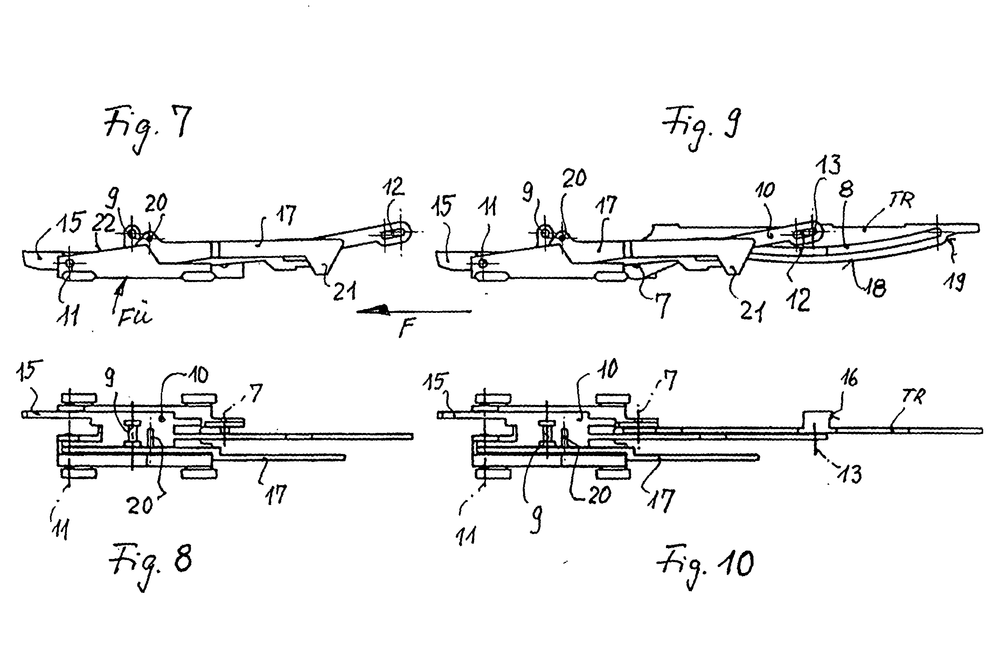

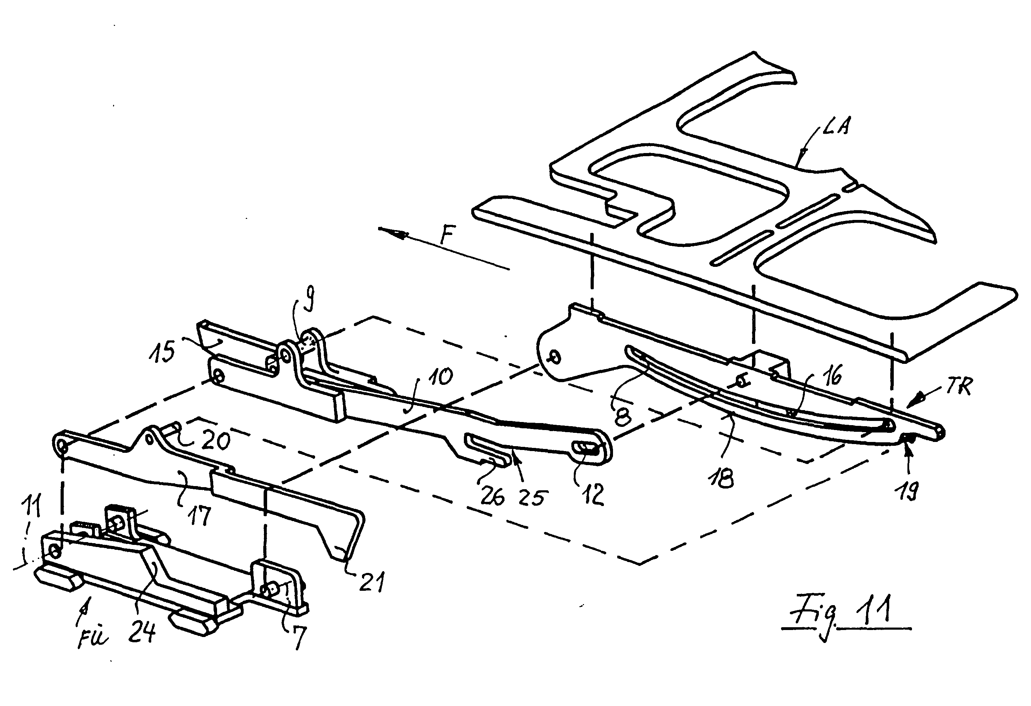

- Fig. 3 und 4: eine schematisierte isolierte Darstellung eines Führungsschlittens in Seitenansicht und Draufsicht,
- Fig. 5 und 6: einen Führungsschlitten gemäß Fig. 3 und 4 in Seitenansicht und Draufsicht, wobei der Führungsschlitten ein Sperrelement in Form eines Sperrhebels trägt,
- Fig. 7 und 8: den Fig. 3 bzw. 5 und 4 bzw. 6 entsprechende Darstellungen, wobei der Führungsschlitten nunmehr mit Sperrelement und Steuerwippe dargestellt ist,
- Fig. 9 und 10: den Fig. 3 bzw. 5 bzw. 7 und 4 bzw. 6 bzw. 8 entsprechende Darstellungen, wobei zu Sperrelement und Steuerwippe der vom jeweiligen Führungsschlitten getragene und über eine Schwenkachse lagefest mit diesem Führungsschlitten schwenkbar verbundene Lamellenträger zusätzlich dargestellt ist, und
- Fig. 11: eine Explosionsdarstellung, stark schematisiert, eines Führungsschlittens mit gemäß Fig. 9 und 10 zugeordneten Teilen der Führungsmechanik in Perspektive.

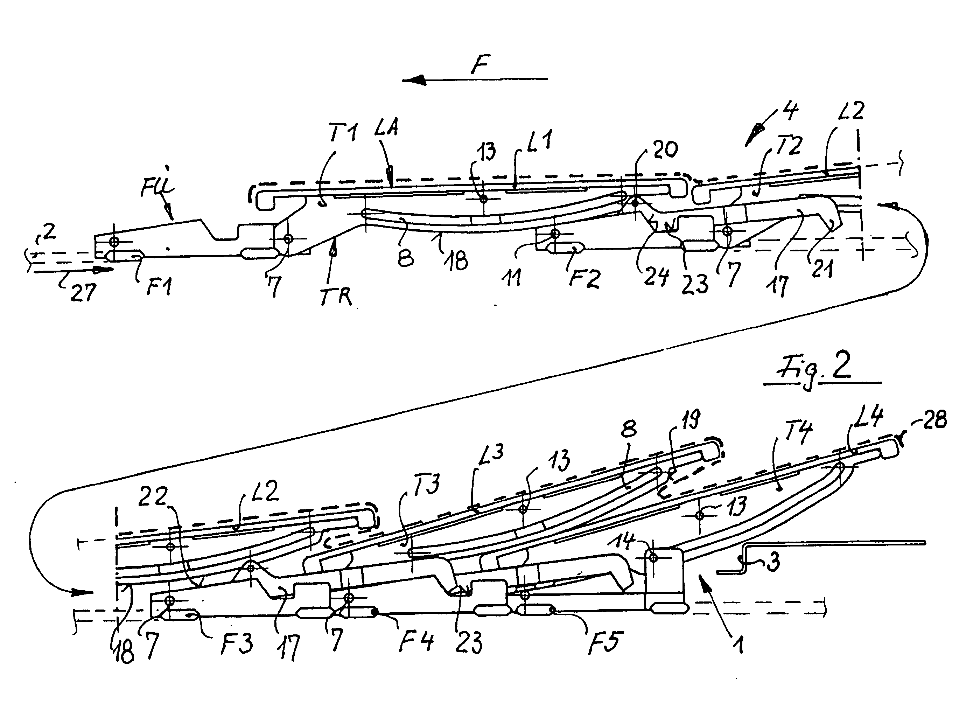

Die Fig. 1 und 2 zeigen ein Lamellendach gemäß der Erfindung in der Zuordnung zu einem Fahrzeug, wobei sich die Darstellung bezüglich des Fahrzeuges auf einen Teil der Dachöffnung 1, der seitlich in Fahrzeuglängsrichtung zur Dachöffnung 1 verlaufenden Führungsschienen 2 und der rückwärtigen Begrenzung 3 der Dachöffnung 1 beschränkt. Die Dachöffnung 1 ist bei geschlossenem Lamellendach 4 von den Lamellen LA, im einzelnen L1 bis L4 überdeckt, wobei die Lamellen L1 bis L4 in der angesprochenen Schließstellung einen flächigen Verbund bilden, abweichend von der in den Fig. 1 und 2 gezeigten teilweisen Öffnungsstellung. Bezogen auf diese Öffnungsstellung sind die Lamellen L1 bis L4, wie für die Lamellen L3 und L4 erkennbar, einander schichtartig übergreifend schräg nach oben angestellt, und zwar, entgegen dem die Fahrtrichtung des Fahrzeuges und die Schließrichtung des Lamellendaches symbolisierenden Pfeil F, schräg nach hinten und oben.

Die Abstützung der Lamellen L1 bis L4 gegenüber dem Fahrzeugaufbau erfolgt über die in den Führungsschienen 2 laufenden Führungsschlitten FÜ, im einzelnen F1 bis F5, wobei jede der Lamellen L1 bis L4 auf zwei der Führungsschlitten FÜ abgestützt ist, so beispielsweise die Lamelle L1 auf den Führungsschlitten F1 und F2 und die Lamelle L2 auf den Führungsschlitten F2 und F3. Damit ergibt sich entsprechend der Abfolge eine Lagerung bzw. Abstützung aufeinander folgender Lamellen, so beispielsweise L1 und L2, in deren Übergangsbereich auf einem Führungsschlitten F2.

Die nachfolgende Beschreibung der Erfindung ist im Wesentlichen auf die Beschreibung der im Übergang zwischen aufeinander folgenden Lamellen LA liegenden und jeweils einen Führungsschlitten FÜ, so beispielsweise dem Führungsschlitten F2 zugeordneten Führungsmechanik 6 beschränkt, die entsprechend dem Führungsschlitten F2 im Übergang zwischen den aufeinander folgenden Lamellen, so beispielsweise L1 und L2 liegt und über die der Führungsschlitten F2 mit dem Lamellenträger T1 bzw. T2 der für die Lamellen L1 bis L4 entsprechend mit TR, im einzelnen mit T1 bis T4 bezeichneten Lamellenträger verbunden ist.

Jede der Lamellen L1 bis L4 ist auf dem bezogen auf die Fahrtrichtung des Fahrzeuges, bzw. Schließrichtung des Daches F jeweils vorderen Führungsschlitten F1 bis F4 schwenkbar abgestützt, wobei die entsprechenden Schwenkachsen jeweils mit 7 bezeichnet sind und dem bezogen auf die Fahrtrichtung F rückwärtigen Ende des jeweiligen Führungsschlitten F1 bis F4 zugeordnet sind. Die Verbindung der jeweiligen Lamelle L1 bis L4 mit den zugehörigen Führungsschlitten F1 bis F5 erfolgt über den der Lamelle L1 bis L4 jeweils zugeordneten Lamellenträger T1 bis T4, der in seiner Längserstreckung mit einer nach der von der jeweiligen Lamelle L1 bis L4 abgewandten Seite durchgebogenen, in Längsrichtung verlaufenden Führungskulisse 8 versehen ist, in die jeweils ein Stützzapfen 9 eingreift, der bezogen auf die jeweilige Führungsmechanik 6 einer Steuerwippe 10 zugeordnet ist, die auf dem zur jeweiligen Lamelle L1 bis L3 rückwärtigen Führungsschlitten F1 bis F4 gelagert ist. Die Lagerung der Steuerwippe 10 erfolgt in einer weiteren Schwenkachse 11, die bezogen auf den jeweiligen Führungsschlitten F1 bis F4 lagefest ist und dem zur lagefesten Schwenkachse 7 gegenüberliegenden, vorderen Ende des Führungsschlittens F2 bis F4 zugeordnet ist. Die Steuerwippe 10 ist ihrerseits aber nicht nur Träger des Stützzapfens 9, der in der Führungskulisse 8 des bezogen auf den die Steuerwippe 10 jeweils tragenden Führungsschlitten F2 bis F4 vorderen Lamellenträgers T1 bis T3 läuft, sondern ihrerseits auch mit der jeweils entgegen der Fahrtrichtung F nächst folgenden, also rückwärtigen Lamelle L2 bis L4 derart in Schwenkrichtung der Lamelle abgestützt verbunden, das entsprechend der Schwenkbewegung der jeweiligen Lamelle L1 bis L4 zwischen ihrer zum Dachverbund flächigen Lage und der aus dem Dach ausgestellten Lage eine Verschwenkung der Steuerwippe 10 stattfindet.

Die Anbindung der Steuerwippe 10 an der entgegen der Fahrtrichtung F jeweils nächst folgenden Lamelle L1 bis L4 erfolgt über eine Langlochführung 12, der am Lamellenträger T1 bis T4 der jeweils rückwärtigen Lamelle L1 bis L4 ein Führungszapfen 13 zugeordnet ist, wie dies insbesondere Fig. 9 und 10 sowie Fig. 11 veranschaulichen, wie aber auch in Fig. 2 erkennbar ist.

Bezüglich des Führungsschlittens F1, der als in Fahrtrichtung F vorderster Führungsschlitten keine Abstützung für eine voraufgehende Lamelle bildet, ist die Steuerwippe 10 ohne Führungsfunktion für eine in Fahrtrichtung voraufgehende Lamelle, wird im Ausführungsbeispiel aus anderweitigen, später noch anzusprechenden Gründen aber beibehalten.

Eine Führungsfunktion über eine Steuerwippe 10 ist auch bezüglich der entgegen der Fahrtrichtung F letzten Lamelle L4 nicht gegeben, sondern es ist bezogen auf diese letzte Lamelle L4 ein zum Führungsschlitten F 5 lagefester Stützzapfen 14 vorgesehen, der in seiner Lage in Verbindung mit einer Sonderform der Führungskulisse 8 für die erforderliche Ausstellbewegung der entgegen der Fahrtrichtung F letzten Lamelle L4 sorgt, wenn der Lamellenverbund in Öffnungsrichtung, d.h. entgegen der Fahrtrichtung F über den vordersten Führungsschlitten F1, dem ein nicht näher dargestellter Schubantrieb zugeordnet ist, beaufschlagt wird. Der auf den ersten Führungsschlitten F1 wirkende Antrieb, beispielsweise ein drucksteifer Kabelantrieb, ist durch den Pfeil 27 symbolisiert.

Bezüglich der hierzu erforderlichen Schubkraftübertragung sind die Lamellen L1 bis L4 unter Vermittlung der von den jeweils zwischen ihnen liegenden Führungsschlitten F2 bis F5 getragenen Steuerwippen 10 gegeneinander verriegelt, bis durch Anstellung der jeweils rückwärtigen Lamelle, beginnend mit der Lamelle L4, und der mit dieser schwenkverbundenen Steuerwippe 10 die Verrastung dieser Steuerwippe 10 gegenüber der jeweils bezogen auf die Fahrtrichtung F vorderen Lamelle L3 bis L1, bzw. deren Lamellenträger T3 bis T1 aufgehoben wird. Zur Verrastung weist die Steuerwippe 10 ein in Fahrtrichtung F über ihre Schwenkachse 11 gegenüber dem jeweiligen Führungsschlitten F5 bis F2 hinausragendes Endteil 15 auf, das bei geschlossenem Lamellendach 4 in seitlicher Überdeckung zu einem lamellenfesten Anschlag 16 liegt, der beispielsweise als seitlicher Ansatz zum jeweiligen Lamellenträger T3 bis T1 vorgesehen ist und der in Abstimmung auf das Endteil 15 eine gekrümmte Anschlagbahn aufweist, so dass entsprechend der Winkellage der Steuerwippe 10 zum jeweiligen Führungsschlitten F3 bis F1 die Schubabstützung beim Öffnen des Daches freigegeben wird oder beim Verfahren des Daches in Schließrichtung ein Einschwenken der Steuerwippe 10 in eine Überdeckungslage zum Anschlag möglich ist, aus der sich bei weiterem Versatz der Lamellen L in Richtung auf ihre Schließlage für die Dachöffnung erneut eine Lage ergibt, in der eine Schubabstützung gegeben ist.

Fig. 2 ergänzt Fig. 1 und die in Verbindung mit Fig. 1 gegebene Erläuterung der erfindungsgemäßen Lamellendachkonstruktion um eine der Fig. 1 entsprechende Ansicht der Lamellenführung von der Gegenseite, nämlich von der Fahrzeugaußenseite, wobei in dieser Ansicht Sperrelemente 17 in Form von Sperrhebeln erkennbar sind, die, in der Ansicht den nicht dargestellten Steuerwippen 10 vorgelagert, ergänzend zu den Steuerwippen 10 den jeweils zwischen zwei Lamellen L1 und L2, L2 und L3 sowie L3 und L4 liegenden Führungsschlitten F2, F3 und F4 zugeordnet sind und über die, als eine Funktion dieser Sperrelemente 17, die Führungsschlitten F2 und F3, F3 und F4 sowie F4 und F5 bei in die Offnungsstellung zusammengeschobenem Lamellendach 4 gegeneinander verriegelt sind. Die Sperrhebel 17 haben jeweils die gleiche Erstreckung wie die Steuerwippen 10, erstrecken sich also in Richtung auf den jeweils rückwärtigen Führungsschlitten F3 bzw. F4 bzw. F5, wobei die Schwenkachse der Sperrhebel 17 im jeweils bezogen auf die Fahrtrichtung vorderen Bereich des Führungsschlittens liegt und, einer bevorzugten Lösung zufolge, koaxial zur Schwenkachse 11 der vom gleichen Führungsschlitten getragenen Steuerwippe 10, so dass die Schwenkachse 11 der Steuerwippe 10 eine gemeinsame Schwenkachse bildet, was sich auch unter Fertigungs- und Toleranzgesichtspunkten als zweckmäßig erweist.

Gesteuert sind die Sperrhebel 17 jeweils über die dem sie tragenden Führungsschlitten im Bezug auf die Fahrtrichtung F vorgelagerte Lamelle L1-L3, bzw. deren Lamellenträger T1-T3, wobei im Ausführungsbeispiel die freie, von der jeweiligen Lamelle abliegende Kante des Lamellenträgers T1 bis T3 eine Abstützkante 18 bildet und im wesentlichen einen der jeweiligen Führungskulisse 8 entsprechenden Verlauf aufweist. Die Abstützkante 18 weist anschließend an den rückwärtigen Endbereich der Führungskulisse 8 einen in Richtung auf die jeweilige Lamelle rückspringenden Verlauf auf, wobei dieser Rücksprung als Stufe 19 einen Rastabsatz für einen Stütznocken 20 des Sperrhebels 17 bildet, der im Ausführungsbeispiel als Zapfen ausgebildet ist, der seitlich zum Sperrhebel 17 auskragt und den jeweiligen Lamellenträger T1 bis T3 untergreift. Die Stufe 19 bildet eine Auflaufschräge, die entgegen der Fahrtrichtung F geneigt in Richtung auf die jeweilige Lamelle verläuft und die somit einen gleitenden Übergang in Richtung auf die Abstützkante 18 in deren entlang der Führungskulisse 8 verlaufenden Bereich ermöglicht.

Über den Stütznocken 20 hinausreichend läuft der Sperrhebel 17 im Bereich seines freien, von der Schwenkachse 11 der Steuerwippe 10 abgelegenen Endes in einer Sperrnase 21 aus, der an dem Führungsschlitten, der jeweils entgegen der Fahrtrichtung F auf den den Sperrhebel 17 tragenden Führungsschlitten folgt, eine Auflaufschräge 22 zugeordnet ist, die in einer Rastaufnahme 23 endet, wobei auch hier der Übergang von der Auflaufschräge 22 in die Rastaufnahme 23 bevorzugt verlaufend erfolgt und die Rastaufnahme 23 bezüglich ihrer an die Auflaufschräge 22 anschließenden Seite 24 unter einem stumpfen Winkel zur Auflaufschräge 22 verläuft.

Nicht dargestellt ist in den Ausführungsbeispielen, dass der Sperrhebel 17 erfindungsgemäß bevorzugt in Richtung auf seine Anlage gegen die jeweilige Abstützkante 18, bzw. den durch die Stufe 19 gebildeten Rastabsatz 19 federbelastet ist, so dass bezogen auf die Schließstellung des Daches 4 und auch Zwischenstellungen im Übergang zur vollen Öffnungslage des Daches 4, in denen der Sperrhebel 17 noch nicht gegen die Auflagefläche 22 abgestützt ist, die dem in Öffnungsrichtung nächst folgenden Schlitten zugeordnet ist, für den Stütznocken 20 eine Anlage an der Abstützkante 18 bzw. deren Stufe 19 gewährleistet ist. In Abhängigkeit von der Vorspannkraft der Feder ergibt sich bei Anlage des Stütznockens 20 an der Stufenschräge 19 auch eine Abstützung in Längsrichtung des Fahrzeuges entgegen der zum Öffnen des Lamellendaches aufzubringenden Schubkraft, so dass, insoweit überlagert, die Steuerwippe 10 und der Sperrhebel 17 Stützfunktion haben und einander ergänzen. Durch die Ausgestaltung der jeweiligen Stützflächen und die durch konstruktive Vorgaben erreichbare zeitliche Abstimmung lässt sich eine wechselseitige Entlastung erreichen und es lassen sich insbesondere auch unzuträglich hohe Kantenbelastungen und dadurch bedingter Verschleiß vermeiden.

Die erfindungsgemäße Lösung ist auch bezüglich unvermeidlicher Toleranzen gut beherrschbar, da - bezogen auf jeweils einen Führungsschlitten FÜ - Lamellenträger LA, Sperrhebel 17 und Steuerwippe 10 jeweils unmittelbar am Führungsschlitten FÜ gelagert sind und sich somit kurze Toleranzketten ergeben. Insbesondere ermöglicht die erfindungsgemäße Ausgestaltung auch in der Breite einen sehr kompakten Aufbau, wobei es sich als vorteilhaft erweist, wenn die Steuerwippe 10 eine beidseitige Abstützung für den in die Kulisse 8 eingreifenden Stützzapfen 9 aufweist, was die Führungsstabilität erhöht. Entsprechend ist der Anschlag 16 zwischen dem Endteil 15 der Steuerwippe 10 und der bezogen auf die Fahrtrichtung F jeweils vorderen Lamelle LA zum jeweiligen Lamellenträger TR seitlich abgesetzt, um den erforderlichen freien Durchgang zu gewährleisten.

Insbesondere Fig. 11 lässt erkennen, dass die Steuerwippen 10 jeweils nahe ihrem Endbereich mit dem Langloch 12 ein Fangmaul 25 aufweisen, das in Richtung auf das Langloch 12 offen ist und das durch einen Ast 26 begrenzt ist, der an dem zum Lamellenträger TR parallel und benachbart verlaufenden Ausleger der Steuerwippe 10 vorgesehen ist und in der Ebene dieses Auslegers liegt. Bezogen auf die Endstellung der Steuerwippe 10 bei aufeinandergefahrenen Führungsschlitten ist, wie aus Fig. 1 für die Führungsschlitten F3 und F4 und die diesen zugeordneten Führungsmechaniken ersichtlich, die am Führungsschlitten F4 gelagerte Steuerwippe mit ihrem Stützzapfen 9 in die in Fahrtrichtung F vordere Endlage in der Führungskulisse 8 des Lamellenträgers T3 eingelaufen, der auf dem Führungsschlitten F3 gelagert ist. Damit ist entsprechend der ausgestellten Öffnungslage der Lamelle L3 und ihres Lamellenträgers T3 auch die Steuerwippe 10 ausgestellt, die auf dem Führungsschlitten F3 gelagert ist und die mit der Lamelle L3 über den in Fig. 1 nur strichliert angedeuteten Führungszapfen 13 verbunden ist, der in das Langloch 12 der Steuerwippe eingreift. Bei dieser Lage der auf dem Führungsschlitten F3 gelagerten Steuerwippe 10 ist deren Fangmaul 25 auf den Stützzapfen 9 der auf dem Führungsschlitten F4 gelagerten Steuerwippe 10 aufgelaufen, die in der Darstellung gemäß Fig. 1 weitgehend nicht sichtbar und durch den Lamellenträger T3 überdeckt ist. Durch den Eingriff des Stützzapfens 9 in das Fangmaul 25 ergibt sich eine unmittelbare Abstützung zwischen den Steuerwippen 10, von denen die eine auf dem Führungsschlitten F3 und die andere auf dem Führungsschlitten F4 gelagert ist und es bilden diese beiden Steuerwippen 10 zusammen mit den sie tragenden Führungsschlitten F3 und F4 ein ungleichseitiges Stützdreieck mit durch die Führungsschlitten F3 und F4 gebildeter Basis und im Stützzapfen 9 liegendem Scheitel. Die bei dieser Lösung erreichte Verspannung der Steuerwippen 10 gegeneinander, die auch in anderer Weise als durch ein Führungsmaul 25 erreicht werden kann, führt zu einer sehr stabilen Abstützung der Lamellen LA in ihrer ausgestellten Öffnungslage, wie dies im Hinblick auf eine möglichst schwingungsfreie Abstützung der Lamellenträger TR und der durch diese getragenen Lamellen LA angestrebt wird und erforderlich ist.

Die erfindungsgemäße Führungsmechanik ist sowohl für Lamellendachkonstruktionen geeignet, bei denen die Lamellen LA gegeneinander und gegen die Dachöffnung 1 abdichtend miteinander verbunden sind, was hier nicht weiter dargestellt ist. Erfindungsgemäß kann die Führungsmechanik aber auch in Verbindung mit einer Dachkonstruktion Verwendung finden, bei der die Lamellen LA lediglich Tragflächen für einen Bezug bilden, der als Dachhaut dient und der auf die Lamellen LA als Faltenspriegel aufgebracht ist, wobei die Dachhaut bei geöffnetem Lamellendach und damit ausgestellten Faltenspriegeln im Übergang zwischen diesen eine Übergangsfalte bildet. In Fig. 2 ist schematisiert die Aufbringung einer solchen Dachhaut 28 auf die Lamellen L1 bis L4 angedeutet und die Dachhaut 28 als Strichlinie dargestellt.

Fig. 11 veranschaulicht, dass bei Abdeckung der Lamellen LA durch eine Dachhaut 28 die Lamellen LA lediglich eine Traggerüst bilden und deshalb auch entsprechend ausgespart sein können, also auch besonders leicht ausgeführt sein können. Insbesondere in Verbindung mit einer solchen Ausgestaltung erweist sich eine Abstützung der lediglich Spriegelfunktion wahrnehmenden Lamellen, z. B. durch entsprechende Verspannung über Steuerwippen 10, als besonders vorteilhaft, um Flattererscheinungen zu vermeiden, ungeachtet der durch die Dachhaut 28 bedingten zusätzlichen Angriffsflächen für Windkräfte. Die in Verbindung mit einer Abdeckung durch eine teils auf den Lamellen LA frei aufliegende, teils mit den Lamellen LA fest, insbesondere durch Verklebung verbundene Dachhaut 28 mögliche, leichte und/oder ausgesparte Ausbildung der Lamellen LA ist auch im Hinblick auf die Faltenbildung der Dachhaut 28 zweckmäßig, da so bereichsweise ein vergrößerter Faltraum geschaffen werden kann.

Abweichend von den dargestellten Ausführungsbeispielen können die Anlagen für den Sperrhebel 17, sei es am Lamellenträger oder am Führungsschlitten auch durch Nutenbahnen gebildet sein, wobei der jeweilige Sperrhebel über zugeordnete Zapfen oder Stützbolzen in diese eingreift.

## Patentansprüche

1. Lamellendach für eine Dachöffnung eines Kraftfahrzeuges mit zumindest zwei Lamellen (L1-L4), die dachfest fixierbar sind und über eine Führungsmechanik (6) schienengeführt zwischen einer Schließstellung, in der sie die Dachöffnung (1) abdeckend in einem flächigen Verbund angeordnet sind, und einer die Dachöffnung (1) freigebenden Öffnungsstellung, in der sie einander teilweise schichtartig übergreifend in Öffnungsrichtung schräg nach oben angestellt sind, beweglich sind, wobei die Lamellen (L1-L4) des in Richtung auf ihre rückwärtige Öffnungsstellung antriebsbeaufschlagten Verbundes, beginnend für aufeinander folgende Lamellen (z.B. L2 und L3) mit der rückwärtigen Lamelle (L3), unter überlappend gleichsinniger Verschwenkung in Richtung auf ihre Öffnungsstellung über die Führungsmechanik (6) umstellbar sind, die Lamellenträger (T1-T4) und Führungsschlitten (F1-F5) umfasst und für einen Lamellenträger (z.B. T2) eine Abstützung auf zwei aufeinander folgenden Führungsschlitten (F2 und F3) vorsieht, wobei ein Führungsschlitten (z.B. F2) - bezogen auf die Schließstellung des Lamellendaches (4) und auf dessen Schließrichtung (F) - eine Schwenkachse (7) für den der rückwärtigen Lamelle (L2) zugehörigen Lamellenträger (T2) und in Verschieberichtung achsversetzt hierzu, eine Schwenkachse (11) für eine Steuerwippe (10) trägt, die, zumindest in Öffnungsrichtung des über sie abgestützten, vorderen Lamellenträgers (T1), in ihrer Schwenkbewegung mit dem bezogen auf die Schließrichtung (F) rückwärtigen Lamellenträger (T2) zwangsgekoppelt und mit dem vorderen Lamellenträger (T1) über eine längs desselben verlaufende Führungskulisse (8), insbesondere in einem zur Schwenkachse (7) des rückwärtigen Lamellenträgers (T2) in Schließrichtung versetzten Bereich, verbunden ist, derart, dass die Steuerwippe (10) aus ihrer dem geschlossenen Dach zugeordneten Grundstellung in eine das Ausstellen der Lamelle (L1) steuernde Funktionsstellung umstellbar ist,
**dadurch gekennzeichnet,**
**dass** die Schwenkachse (7) für den rückwärtigen Lamellenträger (z. B. T2), bei Versatz der Schwenkachse (11) für die Steuerwippe (10) in Schließrichtung (F) des Lamellendaches (4), dem rückwärtigen Endbereich des Führungsschlittens (F2) zugeordnet ist und dass die Steuerwippe (10) bei von ihrer Schwenkachse (11) ausgehender Erstreckung in Richtung auf den jeweiligen, rückwärtigen Lamellenträger (T2) zwischen dessen Schwenkachse (7) und ihrer Schwenkachse (11) gegenüber dem Führungsschlitten (F2) die Verbindung zur Führungskulisse (8) des vorderen Lamellenträgers (T1) aufweist und in ihrem über diese Verbindung in Öffnungsrichtung hinausragenden Bereich gegen den rückwärtigen Lamellenträger (T2) abgestützt ist.

2. Lamellendach nach Anspruch 1,
**dadurch gekennzeichnet,**
**dass** die Steuerwippe (10) in der Schließstellung des Lamellendaches (4) den jeweils vorderen Lamellenträger (z. B. T1) in Öffnungsrichtung des Lamellendaches (4) gegen den die Steuerwippe (10) tragenden Führungsschlitten (F2) in Verschieberichtung abstützt.

3. Lamellendach nach Anspruch 2,
**dadurch gekennzeichnet,**
**dass** die Steuerwippe (10) in der Schließstellung des Lamellendaches (4) einen Überlappungsbereich zu einem dem längsabgestützten Lamellenträger (T1) zugeordneten Anschlag (16) aufweist.

4. Lamellendach nach Anspruch 3,
**dadurch gekennzeichnet,**
**dass** der Anschlag (16) dem längsabgestützten Lamellenträger (T1) zugeordnet ist.

5. Lamellendach nach einem der vorhergehenden Ansprüche,
**dadurch gekennzeichnet,**
**dass** in der Öffnungsstellung des Lamellendaches (4) jeweils aufeinander gefahrene Führungsschlitten (z.B. F2 und F3) gegeneinander verriegelt sind.

6. Lamellendach nach Anspruch 5,
**dadurch gekennzeichnet,**
**dass** zur Verriegelung der aufeinander gefahrenen Führungsschlitten (z. B. F2 und F3) ein von dem einen Führungsschlitten (F2) getragenes Sperrelement (17) vorgesehen ist.

7. Lamellendach nach Anspruch 6,
**dadurch gekennzeichnet,**
**dass** das Sperrelement durch einen Sperrhebel (17) gebildet ist, der bei Lagerung an dem einen Führungsschlitten (F2) zwangsgesteuert gegen den in Öffnungsrichtung nächst folgenden Führungsschlitten (F3) verrastbar ist.

8. Lamellendach nach Anspruch 7,
**dadurch gekennzeichnet,**
**dass** der Sperrhebel (17) in einem zum die Schwenkachse (7) des rückwärtigen Lamellenträgers (T2) tragenden Bereich des Führungsschlittens (F2) in Schließrichtung (F) versetzten Bereich am Führungsschlitten (F2) gelagert ist.

9. Lamellendach nach Anspruch 8,
**dadurch gekennzeichnet,**
**dass** die Schwenkachsen (11) einer Steuerwippe (10) und eines Sperrhebels (17), die dem gleichen Führungsschlitten (z.B. F2) zugeordnet sind, zueinander benachbart vorgesehen sind.

10. Lamellendach nach Anspruch 9,
**dadurch gekennzeichnet,**
**dass** die Schwenkachsen (11) der Steuerwippe (10) und des Sperrhebels (17), die dem gleichen Führungsschlitten (F2) zugeordnet sind, koaxial liegen.

11. Lamellendach nach einem der Ansprüche 7 bis 10,
**dadurch gekennzeichnet,**
**dass** die Steuerwippe (10) und der Sperrhebel (17), die dem gleichen Führungsschlitten (F2) zugeordnet sind, ausgehend von ihrer jeweiligen Schwenkachse (11) gleiche Erstreckungsrichtung aufweisen.

12. Lamellendach nach einem der Ansprüche 7 bis 11,
**dadurch gekennzeichnet,**
**dass**, bezogen auf einen den Sperrhebel (17) tragenden Führungsschlitten (z.B. F2), der Sperrhebel (17) in Schwenkrichtung gegen in Verschieberichtung gegeneinander versetzte Anlageflächen (18, 19; 22) des zum Führungsschlitten (F2) vorderen Lamellenträgers (T1) und des in Öffnungsrichtung des Lamellendaches nachfolgenden Führungsschlittens (F3) abstützbar ist.

13. Lamellendach nach Anspruch 12,
**dadurch gekennzeichnet,**
**dass** die freie, von der Lamelle (z.B. L1) abliegende Kante des zum, den Sperrhebel (17) tragenden Führungsschlitten (F2), vorderen Lamellenträgers (T1) als Abstützkante (18) dem Sperrhebel (17) zugeordnet ist.

14. Lamellendach nach einem der Ansprüche 12 oder 13,
**dadurch gekennzeichnet,**
**dass** die Abstützung des Sperrhebels (17) gegen den in Öffnungsrichtung nächst folgenden Führungsschlitten (F3) gegen eine Auflauffläche (22) desselben erfolgt, die in einer Rastaufnahme (24) endet.

15. Lamellendach nach Anspruch 14,
**dadurch gekennzeichnet,**
**dass** der Sperrhebel (17) an seinem der Rastaufnahme (24) zugeordneten Ende eine Sperrnase (21) aufweist.

16. Lamellendach nach einem der Ansprüche 13 bis 15,
**dadurch gekennzeichnet,**
**dass** die längs der Führungskulisse (8) verlaufende Abstützkante (18) des Lamellenträgers (z.B. T2) in Öffnungsrichtung des Lamellendaches (4) in einem Rastabsatz (19) ausläuft.

17. Lamellendach nach Anspruch 16,
**dadurch gekennzeichnet,**
**dass** der Rastabsatz (19) im Übergang zur Abstützkante (18) als Auflaufschräge ausgebildet ist.

18. Lamellendach nach einem der Ansprüche 13 bis 17,
**dadurch gekennzeichnet,**
**dass** der Sperrhebel (17) in Richtung auf die Abstützkante (18) des zugeordneten Lamellenträgers (z.B. T2) federbelastet ist.

19. Lamellendach nach einem der vorhergehenden Ansprüche,
**dadurch gekennzeichnet,**
**dass** aufeinanderfolgende Lamellen (L1-L4) des Lamellendaches (4) in der Öffnungsstellung über ihre aufeinanderfolgenden Führungsschlitten (z.B. F2 und F3) zugeordneten Steuerwippen (10) gegeneinander abgestützt sind.

20. Lamellendach nach Anspruch 19,
**dadurch gekennzeichnet,**
**dass** die die jeweils vordere Lamelle (z.B. L2) abstützende Steuerwippe (10) in der Öffnungsstellung der Lamellen in eine abstützende Überlappungsstellung zur Steuerwippe (10) der in Öffnungsrichtung nächst folgenden Lamelle (z.B. L3) einfährt.

21. Lamellendach nach Anspruch 20,
**dadurch gekennzeichnet,**
**dass** das Teil der Steuerwippe (10), gegen das sich die in Schließrichtung (F) jeweils voraufgehende Steuerwippe (10) in der Öffnungsstellung des Lamellendaches (4) abstützt, durch den in die Führungskulisse (8) der zwischen diesen Steuerwippen (10) liegenden Lamelle eingreifenden Teil (9) der Steuerwippe (10) gebildet ist.

## Claims

1. Lamella roof for a roof opening of a motor vehicle, having at least two lamellae (L1-L4), which can be fixed to the roof and, guided on rails, can be moved, via a guide mechanism (6), between a closed position, in which they are arranged in a composite sheet-like arrangement covering the roof opening (1), and an open position, in which the roof opening (1) is exposed and the lamellae are positioned obliquely upwards in the opening direction such that they partially overlap one another in a layered manner, it being possible for the lamellae (L1-L4) of the composite arrangement, which is acted upon by a drive in the direction of the rear open position of the said lamellae, to be changed over, beginning for successive lamellae (e.g. L2 and L3) with the rear lamella (L3), by pivoting them in an overlapping manner in the same direction towards their open position via the guide mechanism (6), which comprises lamella carriers (T1-T4) and guide carriages (F1-F5), and a support on two successive guide carriages (F2 and F3) is provided for a lamella carrier (e.g. T2), a guide carriage (e.g. F2) bearing - with respect to the closed position of the lamella roof (4) and to the closing direction (F) thereof - a pivot axis (7) for the lamella carrier (T2) associated with the rear lamella (L2) and, axially offset with respect thereto in the direction of displacement, a pivot axis (11) for a control rocker (10) which, at least in the opening direction of the front lamella carrier (T1) supported via it, is inevitably coupled in its pivoting movement to the lamella carrier (T2) at the rear with respect to the closing direction (F), and is connected to the front lamella carrier (T1) via a guide slot (8) running along the same, in particular in a region offset in the closing direction with respect to the pivot axis (7) of the rear lamella carrier (T2) in such a manner that the control rocker (10) can be changed over from its basic position, which is assigned to the closed roof, into a functional position controlling the opening out of the lamella (L1), **characterized in that**, when the pivot axis (11) for the control rocker (10) is offset in the closing direction (F) of the lamella roof (4), the pivot axis (7) for the rear lamella carrier (e.g. T2) is assigned to the rear end region of the guide carriage (F2), and **in that** the control rocker (10), in its extent starting from its pivot axis (11) in the direction of the particular, rear lamella carrier (T2), has, between the pivot axis (7) thereof and its pivot axis (11) in relation to the guide carriage (F2), the connection to the guide slot (8) of the front lamella carrier (T1) and, in its region protruding in the opening direction over this connection, is supported against the rear lamella carrier (T2).

2. Lamella roof according to Claim 1, **characterized in that**, in the closed position of the lamella roof (4), the control rocker (10) supports the lamella carrier (e.g. T1) which is in front in each case in the opening direction of the lamella roof (4), in the displacement direction against the guide carriage (F2), which carries the control rocker (10).

3. Lamella roof according to Claim 2, **characterized in that**, in the closed position of the lamella roof (4), the control rocker (10) has an overlapping region with respect to a stop (16) which is assigned to the longitudinally supported lamella carrier (T1).

4. Lamella roof according to Claim 3, **characterized in that** the stop (16) is assigned to the longitudinally supported lamella carrier (T1).

5. Lamella roof according to one of the preceding claims, **characterized in that**, in the open position of the lamella roof (4), guide carriages (e.g. F2 and F3) which are moved onto each other in each case are locked in relation to one another.

6. Lamella roof according to Claim 5, **characterized in that** a blocking element (17) which is carried by one guide carriage (F2) is provided in order to lock the guide carriages (e.g. F2 and F3) which are moved onto one another.

7. Lamella roof according to Claim 6, **characterized in that** the blocking element is formed by a blocking lever (17) which, when mounted on the one guide carriage (F2), can be latched, under positive control, against the guide carriage (F3) following next in the opening direction.

8. Lamella roof according to Claim 7, **characterized in that** the blocking lever (17) is mounted in a region on the guide carriage (F2), which region is offset in the closing direction (F) with respect to that region of the guide carriage (F2) which carries the pivot axis (7) of the rear lamella carrier (T2).

9. Lamella roof according to Claim 8, **characterized in that** the pivot axes (11) of a control rocker (10) and of a blocking lever (17), which pivot axes are assigned to the same guide carriage (e.g. F2), are provided adjacent to each other.

10. Lamella roof according to Claim 9, **characterized in that** the pivot axes (11) of the control rocker (10) and of the blocking lever (17), which pivot axes are assigned to the same guide carriage (F2), are situated coaxially.

11. Lamella roof according to one of Claims 7 to 10, **characterized in that** the control rocker (10) and the blocking lever (17), which are assigned to the same guide carriage (F2), have the same direction of extent starting from their respective pivot axis (11).

12. Lamella roof according to one of Claims 7 to 11, **characterized in that**, with respect to a guide carriage (e.g. F2) which carries the blocking lever (17), the blocking lever (17) can be supported in the pivoting direction against bearing surfaces (18, 19; 22), which are offset in relation to one another in the displacement direction, of the lamella carrier (T1) which is in front with respect to the guide carriage (F2) and of the guide carriage (F3) which follows in the opening direction of the lamella roof.

13. Lamella roof according to Claim 12, **characterized in that** the free edge of the lamella carrier (T1) which is in front with respect to the guide carriage (F2) carrying the blocking lever (17), which edge is remote from the lamella (e.g. L1), is assigned as a supporting edge (18) to the blocking lever (17).

14. Lamella roof according to either of Claims 12 and 13, **characterized in that** the blocking lever (17) is supported against the guide carriage (F3) following next in the opening direction, against a run-on surface (22) of the same, which surface ends in a latching socket (24).

15. Lamella roof according to Claim 14, **characterized in that** the blocking lever (17) has a blocking lug (21) at its end assigned to the latching socket (24).

16. Lamella roof according to one of Claims 13 to 15, **characterized in that** the supporting edge (18) of the lamella carrier (e.g. T2), which edge runs along the guide slot (8), peters out in the opening direction of the lamella roof (4) into a latching shoulder (19).

17. Lamella roof according to Claim 16, **characterized in that** the latching shoulder (19) is designed in the transition to the supporting edge (18) as a run-on slope.

18. Lamella roof according to one of Claims 13 to 17, **characterized in that** the blocking lever (17) is spring-loaded in the direction of the supporting edge (18) of the associated lamella carrier (e.g. T2).

19. Lamella roof according to one of the preceding claims, **characterized in that** successive lamellae (L1-L4) of the lamella roof (4) are supported in relation to one another in the open position via their control rockers (10) which are assigned to successive guide carriages (e.g. F2 and F3).

20. Lamella roof according to Claim 19, **characterized in that** the control rocker (10) supporting the front lamella (e.g. L2) in each case moves, in the open position of the lamellae, into a supporting overlapping position with respect to the control rocker (10) of the lamella (e.g. L3) following next in the opening direction.

21. Lamella roof according to Claim 20, **characterized in that** that part of the control rocker (10) against which the control rocker (10) preceding it in each case in the closing direction (F) is supported in the open position of the lamella roof (4) is formed by that part (9) of the control rocker (10) which engages in the guide slot (8) of the lamella situated between these control rockers (10).

## Revendications

1. Toit à lamelles pour une ouverture de toit d'un véhicule automobile, qui comporte au moins deux lamelles (L1 à L4) qui peuvent être fixées solidairement au toit et peuvent être déplacées dans des rails de guidage par une mécanique de guidage (6) entre une position de fermeture dans laquelle elles forment un ensemble plat qui recouvre l'ouverture de toit (1) et une position d'ouverture qui libère l'ouverture de toit (1) et dans laquelle elles sont rabattues obliquement vers le haut dans le sens de l'ouverture en se superposant mutuellement en partie en forme de couches, les lamelles (L1 à L4) de l'ensemble sollicité par un entraînement en direction de sa position arrière d'ouverture pouvant être déplacées par la mécanique de guidage (6) en commençant par la lamelle arrière (L3) et ensuite par les lamelles suivantes (par exemple L2 et L3) en pivotant dans le même sens et en se superposant en direction de leur position d'ouverture, le toit à lamelles comprenant des supports de lamelles (T1 à T4) et des chariots de guidage (F1 à F5) et, pour un support de lamelles (par exemple T2), un soutien sur deux chariots successifs de guidage (F2 et F3), et dans la position de fermeture du toit à lamelles (4) et dans le sens de sa fermeture (F), un chariot de guidage (par exemple F2) porte un axe de pivotement (7) pour le support de lamelles (T2) associé à la lamelle arrière (L2) et, dans une direction axialement décalée par rapport à ce dernier, un axe de pivotement (11) pour une bascule de commande (10) qui, au moins dans le sens de l'ouverture du support de lamelles (T1) avant qu'il soutient, est accouplée de manière forcée dans son déplacement de pivotement au support de lamelles (T2) situé en arrière dans le sens de la fermeture (F) et est reliée au support de lamelles (T1) avant par un coulisseau de guidage (8) qui s'étend le long de ce dernier, en particulier dans une zone décalée dans le sens de la fermeture par rapport à l'axe de pivotement (7) du support de lamelles (T2) arrière, de telle sorte que la bascule de commande (10) puisse être déplacée depuis sa position de base associée au toit fermé jusque dans une position de fonctionnement qui commande la sortie des lamelles (L1),
**caractérisé en ce que**
lors du déplacement de l'axe de pivotement (11) de la bascule de commande (10) dans le sens de la fermeture (F) du toit à lamelles (4), l'axe de pivotement (7) du support de lamelles (par exemple T2) arrière est associé à la zone d'extrémité arrière du chariot de guidage (F2) et **en ce que** dans son prolongement en direction du support de lamelles (T2) arrière correspondant, qui part de son axe de pivotement (11), la liaison entre la bascule de commande (10) et le coulisseau de guidage (8) du support de lamelles (T1) avant est située entre son axe de pivotement (7) et son axe de pivotement (11) sur le chariot de guidage (F2), et dans sa zone qui déborde au-delà de cette liaison dans le sens de l'ouverture, est soutenue contre le support de lamelles (T2) arrière.

2. Toit à lamelles selon la revendication 1, **caractérisé en ce que** lorsque le toit à lamelles (4) est dans la position de fermeture, la bascule de commande (10) soutient le support de lamelles (par exemple T1) situé à l'avant dans le sens de l'ouverture du toit à lamelles (4) contre le chariot de guidage (F2) qui porte la bascule de commande (10), dans la direction du déplacement.

3. Toit à lamelles selon la revendication 2, **caractérisé en ce que** lorsque le toit à lamelles (4) est dans la position de fermeture, la bascule de commande (10) présente une zone de superposition par rapport à une butée (16) associée au support de lamelles (T1) soutenu dans le sens de la longueur.

4. Toit à lamelles selon la revendication 3, **caractérisé en ce que** la butée (16) est associée au support de lamelles (T1) soutenu dans le sens de la longueur.

5. Toit à lamelles selon l'une des revendications précédentes, **caractérisé en ce que** lorsque le toit à lamelles (4) est dans la position d'ouverture, les chariots de guidage (par exemple F2 et F3) rapprochés l'un de l'autre sont verrouillés l'un à l'autre.

6. Toit à lamelles selon la revendication 5, **caractérisé en ce qu'**un élément de blocage (17) porté par un chariot de guidage (F2) est prévu pour verrouiller les chariots de guidage (par exemple F2 et F3) rapprochés l'un de l'autre.

7. Toit à lamelles selon la revendication 6, **caractérisé en ce que** l'élément de blocage est formé par un levier de blocage (17) qui est monté sur un chariot de guidage (F2) et peut être accroché élastiquement sous commande forcée contre le chariot de guidage (F3) qui le suit immédiatement dans le sens de l'ouverture.

8. Toit à lamelles selon la revendication 7, **caractérisé en ce que** le levier de blocage (17) est monté dans une zone du chariot de guidage (F2) décalée dans le sens de la fermeture (F) par rapport à la zone du chariot de guidage (F2) qui porte l'axe de pivotement (7) du support de lamelles (T2) arrière.

9. Toit à lamelles selon la revendication 8, **caractérisé en ce que** les axes de pivotement (11) d'une bascule de commande (10) et d'un levier de blocage (17) qui sont associés au même chariot de guidage (par exemple F2) sont prévus au voisinage l'un de l'autre.

10. Toit à lamelles selon la revendication 9, **caractérisé en ce que** les axes de pivotement (11) de la bascule de commande (10) et du levier de blocage (17) qui sont associés au même chariot de guidage (F2) sont coaxiaux.

11. Toit à lamelles selon l'une des revendications 7 à 10, **caractérisé en ce que** la bascule de commande (10) et le levier de blocage (17) qui sont associés au même chariot de guidage (F2) s'étendent dans la même direction en partant de leur axe de pivotement (11) respectif.

12. Toit à lamelles selon l'une des revendications 7 à 11, **caractérisé en ce que** par rapport à un chariot de guidage (par exemple F2) qui porte le levier de blocage (17), le levier de blocage (17) peut s'appuyer dans la direction de pivotement sur des surfaces de pose (18, 19; 22), décalées l'une par rapport à l'autre dans la direction du déplacement, du support de lamelles (T1) avant et du chariot de guidage (F3) qui le suit immédiatement dans le sens de l'ouverture du toit à lamelles.

13. Toit à lamelles selon la revendication 12, **caractérisé en ce que** le bord libre, qui déborde vers le bas de la lamelle (par exemple L1), du support de lamelles (T1) qui est situé en avant du chariot de guidage (F2) qui porte le levier de blocage (17) est associé comme bord d'appui (18) au levier de blocage (17).

14. Toit à lamelles selon l'une des revendications 12 et 13, **caractérisé en ce que** le soutien du levier de blocage (17) sur un chariot de guidage (F3) qui le suit immédiatement dans le sens de l'ouverture s'effectue sur une surface de déplacement (22) de ce chariot qui se termine en un logement d'encliquetage (24).

15. Toit à lamelles selon la revendication 14, **caractérisé en ce qu'**à son extrémité associée au logement d'encliquetage (24), le levier de blocage (17) présente un bec de blocage (21).

16. Toit à lamelles selon l'une des revendications 13 à 15, **caractérisé en ce que** le bord de soutien (18) du support de lamelles (par exemple T2) qui s'étend le long du coulisseau de guidage (8) se prolonge en un appendice d'encliquetage (19) dans le sens de l'ouverture du toit à lamelles (4).

17. Toit à lamelles selon la revendication 16, **caractérisé en ce qu'**à la transition vers le bord de soutien (18), l'appendice d'encliquetage (19) est configuré comme pente de déplacement.

18. Toit à lamelles selon l'une des revendications 13 à 17, **caractérisé en ce que** le levier de blocage (17) est placé sous la sollicitation d'un ressort en direction du bord de soutien (18) du support de lamelles (par exemple T2) associé.

19. Toit à lamelles selon l'une des revendications précédentes, **caractérisé en ce que** dans la position d'ouverture, des lamelles successives (L1, L4) du toit à lamelles (4) sont soutenues l'une contre l'autre par l'intermédiaire de leurs bascules de commande (10) associées à des chariots de guidage (par exemple F2 et F3) successifs.

20. Toit à lamelles selon la revendication 19, **caractérisé en ce que** lorsque les lamelles sont dans la position d'ouverture, les bascules de commande (10) qui soutiennent les lamelles (par exemple L2) situées respectivement à l'avant passent dans une position de superposition avec la bascule de commande (10) qui soutient la lamelle (par exemple L3) qui la suit immédiatement dans le sens de l'ouverture.

21. Toit à lamelles selon la revendication 20, **caractérisé en ce que** la partie de la bascule de commande (10) contre laquelle la bascule de commande (10) précédente dans le sens de la fermeture (F) s'appuie lorsque le toit à lamelles (4) est dans la position de fermeture, est formée par la partie (9) de la bascule de commande (10) qui s'engage dans le coulisseau de guidage (8) de la lamelle située entre ces bascules de commande (10).
